# EUROPÄISCHE PATENTSCHRIFT

(11) **EP 1 226 367 B1**
(45) Veröffentlichungstag und Bekanntmachung des Hinweises auf die Patenterteilung: **19.11.2003**
(21) Anmeldenummer: 00977431.6
(22) Anmeldetag: 24.10.2000
(51) Int. Cl.: F16D 43/202, B60R 1/074

(54) **AUSRASTBARER SCHWENKANTRIEB**
PIVOTING ACTUATOR WHICH CAN BE DISENGAGED
MECANISME D'ENTRAINEMENT EN ROTATION MOTORISE ET A DESENCLENCHEMENT

(30) Priorität: 06.11.1999 DE 19953484
(43) Veröffentlichungstag der Anmeldung: 31.07.2002
(73) Patentinhaber: Oechsler Aktiengesellschaft, 91522 Ansbach (DE)
(72) Erfinder: BÖGELEIN, Josef, 91623 Sachsen/Ansbach (DE)
(86) Internationale Anmeldenummer: EP0010453
(87) Internationale Veröffentlichungsnummer: WO01034988

(56) Entgegenhaltungen:
- EP-A- 0 652 135
- DE-A- 4 327 388
- GB-A- 1 502 733
- US-A- 5 867 328
- PATENT ABSTRACTS OF JAPAN vol. 010, no. 029 (M-451), 5. Februar 1986 (1986-02-05) & JP 60 185651 A (NISSAN JIDOSHA KK), 21. September 1985 (1985-09-21)

## Beschreibung

Aus der DE 43 37 750 A1 = EP 0 652 135 A ist zum elektrischen Verstellen eines Kraftfahrzeug-Außenspiegels ein Schwenkantrieb mit einer Dreh-Kupplung bekannt, die zwischen einem Einstell-Getriebe und einer Schwenk-Welle angeordnet ist. Ein rampenförmiger Eingriff zwischen Kupplungs-Antrieb und Kupplungs-Abtrieb verrastet in einer konstruktiv vorgegebenen gegenseitigen Drehstellung. Diese Verrastung löst sich gegen die axiale Haltekraft einer Rückstell-Feder, wenn ein externes Drehmoment auf die momentane Winkelstellung ausgeübt wird, etwa weil eine Spiegelstellung manuell verstellt werden soll oder weil gegen den Randbereich des Spiegelhalters eine Kollisionskraft einwirkt. Dann rastet eine unter der Federbelastung ratschenartig wirkende mechanische Überlast-Noppenkupplung zwischen Stellmotor und Schwenkwelle aus, und der Spiegel bleibt danach auf dem Nocken in der Winkelstellung stehen, bei der das externe Drehmoment wieder verschwindet. Der motorische Antrieb kann den Spiegelhalter dann weiter drehen, bis der Nocken wieder einfällt und nun wieder als Anschlag für die winkelmäßig beschränkte motorische Schwenkbewegung des Spiegels dient. Allerdings ist die Belastung des kleinen Stütznockens konstruktiv kritisch; funktionszuverlässiger wäre eine möglichst weit ausgreifende Abstützung zwischen dem stationären und dem dagegen verschwenkbaren Konstruktionsteil.

Das gilt entsprechend für den achsparallelen Dreiecksnocken, der gemäß DE 43 27 388 A1 als Rastmittel bei einem ausladenden Kraftfahrzeug-Außenrückspiegel vorgesehen ist, welcher bedarfsweise mittels eines Getriebemotors um eine vertikale Gelenkachse an die Karosserie heranklappbar ist. Die motorische Rückbewegung in die Betriebsstellung wird dann mit dem Einfall jenes Dreiecksnocken in eine geometrisch korrespondierende Ausnehmung am Spiegelfuß beendet.

Ähnliche Konstruktionen zum gleichen Zweck sind etwa aus der DE 41 19 748 A1 oder aus der DE 1 98 33 672 A1 bekannt. Eine Besonderheit ist die nach JP 60 185651 A begrenzte motorische Verschwenkbarkeit eines Spiegelgehäuses relativ zu einem fahrzeugfesten Begrenzungssektor. Eine etwa gleichartige Winkelbegrenzung weist die Spiegelhalterung nach US 5,867,328 A am Sockel eines spitzkegeligen, axial federbelasteten Schwenkgelenkes auf, dessen Anschlag aber seinerseits zur Vermeidung mechanischer Überbeanspruchung im Reibschluß verdrehbar ist. Bei der Getriebe-Einheit gemäß DE 1 96 15 002 A1 dagegen ist nur ein federbelasteter Kraftschluß zwischen einem Reibring und einer kegelstumpfförmigen Reibfläche vorgesehen, so daß der verstellte Spiegel zunächst manuell in seine Normalstellung verdreht werden muß, aus der dann wieder die motorische Verschwenkung erfolgt.

Unabhängig von der speziellen Problematik eines kollisionsbedingt verstellten Kraftfahrzeug-Außenspiegels, der dann elektromotorisch wieder in seine bisherige Winkelstellung zurückgeschwenkt werden soll, beschreibt das GB-Patent 1 502 733 eine Ratschenkupplung mit einer Kronverzahnung, die bei kritisch anwachsendem Drehmoment außer Eingriff gerät.

Der Erfindung liegt die technische Problemstellung zugrunde, einen Schwenkantrieb gattungsgemäßer Art dahingehend weiterzuentwickeln, daß günstigere Kraftübertragungsverhältnisse in beschränktem Einbauraum verwirklicht sind.

Diese Aufgabe ist erfindungsgemäß dadurch gelöst, daß der Schwenkantrieb gemäß den im Hauptanspruch angegebenen Merkmalen ausgelegt ist. Danach können bei hinreichend stark einwirkendem externem Drehmoment, wie insbesondere infolge einer manuellen oder kollisionsbedingten momentanen Spiegelverstellung, Kupplungs-Rastklauen mit abtriebsseitig relativ zueinander verdrehbaren, gewindeähnlich ansteigenden Flanken vom Kupplungs-Abtrieb wie als solches bekannt axial bis außer Eingriff gegen die Rückstellfederkraft abgehoben werden. Währenddessen kann der Antrieb durchaus auch gerade motorisch verdreht werden, in der Regel ist aber der Antrieb in Ruhe und deshalb vom stillstehenden Getriebemotor drehstarr festgehalten. Außer Kupplungseingriff läßt dann der mit dem Spiegel drehstarr verbundene Kupplungs-Abtrieb sich dem Antrieb gegenüber von außen bis in eine beliebige Winkelstellung frei verdrehen. Wenn danach der elektromotorische Antrieb wieder einsetzt, wird die antriebsseitige Rastklaue dem drehgebremsten Abtrieb gegenüber so weit verdreht, bis sie in die zugehörige Ausnehmung im Kupplungs-Abtrieb einfällt, und nun wird bei weiterer antriebsseitiger Drehbewegung der wieder drehstarr gekoppelte Abtrieb mitgenommen, z.B. ein Spiegel mitgedreht.

Wenn sich also - mit anderen Worten - zur Beschränkung des Arbeitsbereiches der motorischen Verschwenkung im Drehweg des Kupplungs-Antriebs ein gehäusefester Anschlag befindet, dann wird ein damit zusammenwirkender antriebsseitiger Schaltnocken infolge Axialverlagerung aufgrund externer Drehmomenteneinleitung aus diesem begrenzten Drehweg herausgehoben, um in einer dazu parallelen Umlaufbahn vom Motor frei durchgedreht werden zu können. Nach dem Einrasten der Kupplungsklauen wird der Abtrieb wie beschrieben mitgedreht, bis der federbelastete Nocken wieder in den begrenzten Drehweg einfällt, womit die Halterung wie gewünscht motorisch in die Ausgangsstellung weitergedreht wurde, aus der heraus sie fortan wieder motorisch innerhalb des winkelmäßig beschränkten Arbeitsbereiches verschwenkt wird.

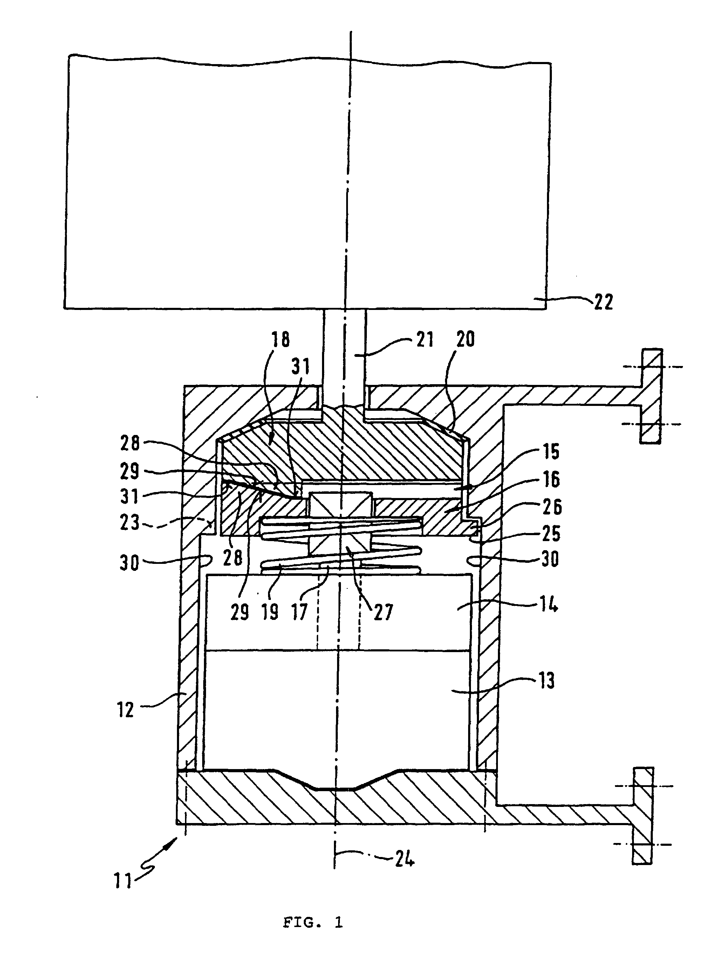

Zur nähren Erläuterung der Erfindung und ihrer zweckmäßigen Weiterbildungen wird auf die nachstehende Beschreibung eines in der Zeichnung nicht maßstabsgerecht und unter Beschränkung auf das Funktionswesentliche vereinfacht skizzierten bevorzugten Realisierungsbeispieles zur erfindungsgemäßen Lösung verwiesen. Die einzige Figur der Zeichnung zeigt einen erfindungsgemäß ausgelegten Schwenkantrieb mit einem auf knapp 180° begrenzten Drehweg seiner Schwenkbewegung im Axial-Längsschnitt.

Der skizzierte Schwenkantrieb 11 für ein motorisch zu bewegendes Schwenk-Element 22 wie etwa einen Spiegel, ein Warnsignal, einen Inschriftenträger o.dgl. beherbergt in einem Gehäuse 12 einen hochtourigen Antriebs-Motor 13 mit in diesem Ausführungsbeispiel direkt angebautem Untersetzungs-Getriebe 14. Für eine Schwenkrichtungs-Umkehr ist der Motor 13 umsteuerbar und/oder das Getriebe 14 umschaltbar. Bei einer dem Getriebe 14 nachgeschalteten Rast-Kupplung 15 ist deren Kupplungs-Antrieb 16 mit der Getriebe-Ausgangswelle 17 drehfest verbunden, während ihr Kupplungs-Abtrieb 18 von einer Feder 19 über eine Bremsfläche 20 gegen das Innere des Gehäuses 12 unter Reibung verdrehbar abgestützt ist. Mit dem Abtrieb 18 ist eine Schwenkwelle 21 drehfest verbunden, von der das Schwenk-Element 22 getragen wird. Dessen Verschwenkung erfolgt, bei formschlüssig miteinander in Eingriff stehenden Kupplungs-Trieben 16-18, hinsichtlich Schwenkrichtung und ggf. Schwenkgeschwindigkeit nach Maßgabe der elektrischen Anregung des Getriebe-Motors 13-14.

Allerdings ist der Schwenkwinkel der Schwenk-Welle 21 gewöhnlich auf nur einen Bruchteil einer ganzen Umdrehung begrenzt, wofür ein gehäusefester Anschlag 23 entsprechender Bogenlänge radial zur Achse 24 hin in den zur Antriebs-Achse 24 koaxialen Drehweg 25 eines am Kupplungsantrieb 16 radial von der Achse 24 fort vorstehenden Nockens 26 hineinragt. Der Motor 13 ist dafür ausgelegt, ohne Überhitzungsgefährdung auch durch Anlage des Nokkens 26 gegen den Anschlag 23 auf Stillstand abgebremst betrieben werden zu können. Stattdessen oder zusätzlich kann vorgesehen sein, daß steuerungsseitig etwa eine Stromsensorschaltung die weitere Bestromung während des mechanischen Abbremsens auf Stillstand am Anschlag 23 unterbricht. Jedenfalls ist der Schwenkwinkel des Elementes 22 auf den konstruktiv begrenzten Drehweg 25 des Kupplungs-Schaltnockens 26 eingeschränkt.

Wenn auf die ausgangsseitige Welle 21 von außen ein Drehmoment einwirkt, insbesondere im Kollisionsfall oder weil das Element 22 manuell verstellt werden soll, kann das System nicht entsprechend um seine Achse 24 verdreht werden, da der Formschluß 27 von der (noch) eingerasteten Kupplung 15 zum Motor 13 wegen dessen stark untersetzenden Getriebes 14 als starres Momentenlager wirkt. Bei hinreichend starkem äußerem Drehmoment verdrehen sich aber die beiden Triebe 16/18 der Kupplung 15 gegeneinander, weil ihre miteinander verrastenden Klauen 28-28 nicht steil (achsparallel), sondern über in beiden Drehrichtungen jeweils gegensinnig gewindeförmig um die Achse 24 ansteigende Auflauf Rampen 29 miteinander im Rasteingriff stehen. Dieser wechselseitige Flankenauflauf erfolgt so lange, bis die jeweilige Klaue 28 aus der Einsenkung im gegenüberliegenden Trieb 16 bzw. 18 axial herausgehoben ist und somit die Klauen-Spitzen 31 sich um die Achse 24 verdrehbar axial gegen den jeweils gegenüberliegenden Trieb 16 bzw. 18 abstützen. Entgegen der vereinfachten Skizze ist für verkantungsfreie Abstützung tatsächlich eine Mehrzahl peripher gegeneinander versetzter Rampen-Klauen 28 und gegenüberliegend zugeordneter Einsenkungen an den Trieben 16,18 ausgebildet, und das in einer solchen Teilung (radial bzw. peripher so gegeneinander versetzt), daß der gleichzeitige Einfall aller Klauen nur in einer einzigen, konstruktiv vorgegebenen Relativposition zwischen den beiden Trieben 16,18 möglich ist.

Unter federelastischer axialer Abstützung des von außen verdrehten Kupplungs-Abtriebes 18 gegen das Gehäuse 12 bei demgegenüber rotatorischer Abstützung des längs seines Formschlusses 28 axial verschiebbaren Kupplungs-Antriebes 16 wird also letzterer über die gegeneinander sich verlagernden Klauen-Rampen 29, unter entsprechender axialer Stauchung der Schraubenfeder 19, etwas vom Kupplungsabtrieb 18 abgehoben. Wenn dadurch die Kupplungs-Klauen 28 schließlich ganz außer Eingriff gelangt sind, kann die Welle 21 in der Winkelstellung (relativ zum Kupplungsantrieb 16) stehengelassen werden; oder die Welle 21 wird mit nun verringertem erforderlichem externem Drehmoment weiter verdreht, bis die Klauen nach genau einer Umdrehung in der alten Winkelstellung des Elementes 22 wieder einfallen. Dann ist die Schwenk-Welle 21 wieder gegenüber dem Motor 13 dreharretiert, der Motor 13 bestimmt also wieder de Schwenkbewegung der Welle 21 in den Grenzen des Drehweges 25.

Solange die Klauen 28 den Kupplungs-Antrieb 16 noch axial verschoben halten, ist dessen Schaltnocken 26 aus seinem vom Anschlag 23 begrenzten Drehweg 25 in eine unbegrenzte Umlaufbahn 30 herausgehoben. Bei extern aus der Arbeitsstellung verdreht stehengelassener Schwenk-Welle 21 wird der Motor 13 also nicht mehr vom Anschlag 23 mechanisch blokkiert, und der Kupplungs-Antrieb 16 kann - gegenüber dem mittels der Bremsflächen 20 nun gegen Mitdrehen festgehaltenen Kupplungs-Abtrieb 18 - frei durchgedreht werden, bis die Rast-Klauen 28-28 wieder einfallen. Dieser Einfall wird in der aktuellen Winkelstellung der Welle 21 allerdings in der Regel noch vom rippenförmig umlaufenden Anschlag 23 axial abgefangen. Der Nocken 26 wird deshalb vom Getriebemotor 13-14 zunächst unter dem Andruck der Feder 19 - unter Mitnahme des Abtriebs 18 und seiner Welle 21 - axial gegen den bogenförmigen Anschlag 23 abgestützt weitergedreht, bis der Nocken 26 am Bogenende vom Anschlag 23 axial in die Ebene des begrenzten Drehweges 25 zwischen den peripheren Stirnenden des Anschlags 23 zurück herunterfällt und die Klauen 29 dadurch axial ganz einfallen läßt. Nun ist die externe Verschwenkung des Elementes 22 wieder aufgehoben, und fortan erfolgt seine motorische Verschwenkung erneut innerhalb des durch den Anschlag 23 im Drehweg 25 des Nockens 26 konstruktiv vorgegeben Schwenkwinkels.

Der gesamte Schwenkantrieb 11, nämlich sein Gehäuse 12 einschließlich seiner bewegten Teile (bis auf den Motor 13), läßt sich preisgünstig und funktionszuverlässig im Kunststoffspritzguß fertigen. Allerdings wird dann zweckmäßigerweise vor dem Kupplungs-Abtrieb 18 ein konischer, also etwa hohlkegelstumpfförmiger Reibring mit auf die rotierende Bremsfläche 20 optimierten Reibeigenschaften drehfest in das Gehäuse 12 eingelegt.

Um also den motorischen Schwenkantrieb 11 für z.B. eine winkelmäßig begrenzte Außenspiegel-Verstellung nach externem Verschwenken (von Hand oder aufgrund einer Kollision) auch zum elektrischen Zurückdrehen in die Arbeitsstellung verwenden zu können, wird - infolge externen Verschwenkens des Kupplungs-Abtriebs 18 - der Kupplungseingriff zum Kupplungs-Antrieb 16 einer federelastischen Rückstellkraft entgegen axial gelöst und diesem gegenüber der Abtrieb 18 nach Maßgabe des einwirkenden Drehmomentes verdreht. Dadurch wird letzterer auch aus seiner Drehweg-Begrenzung herausgehoben, so daß der Getriebe-Motor 13 den Kupplungs-Antrieb 16 frei durchdrehen kann, bis die eine konstruktiv vorgegebene Relativstellung zwischen Kupplungs-Antrieb 16 und -Abtrieb 18 wieder erreicht ist, in welcher die Kupplungs-Klauen 28 wieder in die Ausnehmungen des jeweils gegenüberliegenden Triebes 16 bzw. 18 einfallen. Nun dreht der Motor 13 den Spiegel mit, bis der Kupplungs-Antrieb 16 wieder aus der unbeschränkten Umlaufbahn 30 in den winkelbegrenzten Drehweg 25 axial zurückfällt, und der Spiegel ist wie gewünscht wieder um seine frühere Arbeitsposition herum motorisch verschwenkbar.

## Patentansprüche

1. Schwenkantrieb (11) mit einer zwischen einem Einstell-Getriebe (J4) und einer Schwenk-Welle (21) gelegenen Dreh-Kupplung (15), deren rampenförmiger Eingriff zwischen Kupplungs-Antrieb (16) und Kupplungs-Abtrieb (18) in einer konstruktiv vorgegebenen gegenseitigen Drehstellung miteinander verrastet aber unter abtriebsseitig externer Drehmomenteneinleitung gegen die Kraft einer Rückstell-Feder (19) axial ausrastbar ist, **dadurch gekennzeichnet, daß** Kupplungs-Antrieb (16) und -Abtrieb (18) im Innern eines Gehäuses (12) angeordnet und mit Kupplungs-Rastklauen (28) mit gewindeähnlichen Auflauf-Rampen (29) ausgestattet sind, von denen der drehfest mit der Schwenk-Welle (21) ausgestattete Kupplungs-Abtrieb (18) mittels der Feder (19) über eine kegelstumpfförmige Bremsfläche (20) gegen das Innere des Gehäuses (12) unter Reibung verdrehbar abgestützt ist.

2. Schwenkantrieb nach Anspruch 1, **dadurch gekennzeichnet, daß** eine gehäusefest abgestützte, axial wirkende Druck-Feder (19) den Antrieb (16) seiner Ausrastverschiebung entgegen gegen den Abtrieb (18) der Kupplung (15) und letzteren gegen eine Bremsfläche (20) andrückt.

3. Schwenkantrieb nach Anspruch 2, **dadurch gekennzeichnet, daß** der Kupplungs-Abtrieb (18) gegen einen gehäusefesten Reibring axial anliegt.

4. Schwenkantrieb nach einem der vorangehenden Ansprüche, **gekennzeichnet durch** eine getriebliche Verdrehsicherung des Kupplungs-Antriebs (16) gegen Drehmomenteneinleitung vom Abtrieb (19) her.

5. Schwenkantrieb nach einem der vorangehenden Ansprüche, **gekennzeichnet durch** einen winkelbegrenzten Drehweg (25) des Kupplungs-Antriebs (16).

6. Schwenkantrieb nach dem vorangehenden Anspruch, **dadurch gekennzeichnet, daß** der Antrieb (16) über die Klauen-Rampen (29) bei außer Eingriff befindlichen Kupplungs-Rastklauen (28) aus dem begrenzten Drehweg (25) in eine unbegrenzte Umlaufbahn (30) verschoben ist.

7. Schwenkantrieb nach dem vorangehenden Anspruch. **dadurch gekennzeichnet, daß** im Drehweg (25) eines antriebsseitigen Radial-Nockens (26) ein parallel zur Umlaufbahn (30) als rippenförmiges Bogenstück sich erstreckender gehäusefester Anschlag (23) gelegen ist.

8. Schwenkantrieb nach dem vorangehenden Anspruch, **dadurch gekennzeichnet, daß** er mit einem elektrischen Getriebe-Motor (13-14) ausgestattet ist.

9. Schwenkantrieb nach dem vorangehenden Anspruch, **dadurch gekennzeichnet, daß** seine Schwenk-Welle (21 ) mit einem zu verschwenkenden Element (22) in Form eines Kraftfahrzeug-Außenspiegels ausgestattet ist.

## Claims

1. Pivoting actuator (11) having a rotary coupling (15) which is placed between a setting mechanism (14) and a pivoting shaft (21) and whose ramp-like engagement between coupling drive (16) and coupling output (18) can be latched to each other in a mutual rotational position predefined by the design but can be unlatched axially counter to the force of a restoring spring (19) when an external torque is introduced on the output side, **characterized in that** the coupling drive (16) and output (18) are arranged in the interior of a housing (12) and are equipped with coupling latching claws (28) with thread-like leading ramps (29), of which the coupling output (18), rotationally fixedly equipped with the pivoting shaft (21), is supported by means of the spring (19) via a truncated-cone braking surface (20) against the interior of the housing (12) such that it can be rotated under friction.

2. Pivoting actuator according to Claim 1, **characterized in that** a compression spring (19) supported fixed to the housing and acting axially presses the drive (16), counter to its disengagement displacement, against the output (18) of the coupling (15), and presses the latter against a braking surface (20) .

3. Pivoting actuator according to Claim 2, **characterized in that** the coupling output (18) bears axially against a friction ring fixed to the housing.

4. Pivoting actuator according to one of the preceding claims, **characterized by** mechanical rotational securing of the coupling drive (16) against the introduction of torque from the output (19).

5. Pivoting actuator according to one of the preceding claims, **characterized by** a limited-angle rotational path (25) of the coupling drive (16).

6. Pivoting actuator according to the preceding claim, **characterized in that**, when the coupling latching claws (28) are disengaged, the drive (16) is displaced via the claw ramps (29) from the limited rotational path (25) into an unlimited circulating orbit (30).

7. Pivoting actuator according to the preceding claim, **characterized in that** a stop (23) extending parallel to the orbit (30) as a rib-like curved piece is placed in the rotational path (25) of a radial cam (26) on the drive side.

8. Pivoting actuator according to the preceding claim, **characterized in that** it is equipped with a geared electric motor (13-14).

9. Pivoting actuator according to the preceding claim, **characterized in that** its pivoting shaft (21) is equipped with an element (22) to be pivoted in the form of a motor vehicle exterior mirror.

## Revendications

1. Entraînement pivotant (11) comprenant un accouplement rotatif (15) prévu entre un engrenage d'ajustement (14) et un arbre pivotant (21), dont l'engagement en forme de rampe entre l'entraînement d'accouplement (16) et l'entraînement de sortie d'accouplement (18) est encliqueté mutuellement dans une position de rotation mutuelle prédéfinie par la construction mais peut être désenclenché axialement sous l'effet de l'introduction d'un couple extérieur du côté de l'entraînement de sortie à l'encontre de la force d'un ressort de rappel (19), **caractérisé en ce que** l'entraînement d'accouplement (16) et l'entraînement de sortie d'accouplement (18) sont disposés à l'intérieur d'un boîtier (12) et sont équipés de griffes d'encliquetage d'accouplement (28) avec des rampes de montée similaires à un filetage (29), par lesquelles l'entraînement de sortie d'accouplement (18) équipé de l'arbre pivotant (21) est supporté à rotation sous friction au moyen du ressort (19) par le biais d'une surface de friction (20) de forme tronconique contre l'intérieur du boîtier (12).

2. Entraînement pivotant selon la revendication 1, **caractérisé en ce qu'**un ressort de compression (19) agissant axialement, supporté de manière fixe par rapport au boîtier, presse l'entraînement (16) à l'encontre de son déplacement de désenclenchement contre l'entraînement de sortie (18) de l'accouplement (15) et ce dernier contre une surface de freinage (20) .

3. Entraînement pivotant selon la revendication 2, **caractérisé en ce que** l'entraînement de sortie d'accouplement (18) s'applique axialement contre un anneau de friction fixe par rapport au boîtier.

4. Entraînement pivotant selon l'une quelconque des revendications précédentes, **caractérisé par** une fixation par engrenage contre la rotation de l'entraînement d'accouplement (16) contre l'introduction de couples par l'entraînement de sortie (19).

5. Entraînement pivotant selon l'une quelconque des revendications précédentes, **caractérisé par** une course de rotation (25) à limitation angulaire de l'entraînement d'accouplement (16).

6. Entraînement pivotant selon la revendication précédente, **caractérisé en ce que** l'entraînement (16) est déplacé par les rampes des griffes (29) hors de la course de rotation (25) dans une trajectoire périphérique (30) lorsque les griffes d'encliquetage (28) d'accouplement sont désengagées.

7. Entraînement pivotant selon l'une quelconque des revendications précédentes, **caractérisé en ce que** dans la course de rotation (25) d'une came radiale (26) du côté de l'entraînement, on place une butée (23) fixe par rapport au boîtier, s'étendant parallèlement à la trajectoire périphérique (30) sous forme de pièce courbe en forme de nervure.

8. Entraînement pivotant selon la revendication précédente, **caractérisé en ce qu'**il est équipé d'un moteur électrique à engrenages (13-14).

9. Entraînement pivotant selon la revendication précédente, **caractérisé en ce que** son arbre pivotant (21) est équipé d'un élément pivotant (22) sous la forme d'un miroir extérieur de véhicule.
